Europäisches Patentamt

European Patent Office

Office européen des brevets

(19)

(11) Publication number: **0 380 369**
**A1**

(12) **EUROPEAN PATENT APPLICATION**

(21) Application number: **90300859.7**

(51) Int. Cl.⁵: **G05D 23/24, A47J 27/21**

(22) Date of filing: **26.01.90**

(30) Priority: **26.01.89 GB 8901668**
**13.11.89 GB 8925649**

(43) Date of publication of application:
**01.08.90 Bulletin 90/31**

(84) Designated Contracting States:
**AT BE CH DE DK ES FR GB GR IT LI LU NL SE**

(71) Applicant: **OTTER CONTROLS LIMITED**
**Otters 'Ole Market Street**
**Buxton Derbyshire SK17 6LA(GB)**

(72) Inventor: **Bromley, Andrew Howard**
**51 Windsor Road, Fairfield**
**Buxton, Derbyshire(GB)**

(74) Representative: **Milhench, Howard Leslie et al**
**R.G.C. Jenkins & Co. 26 Caxton Street**
**London SW1H 0RJ(GB)**

(54) **Controls for electrically powered heating elements.**

(57) An electronic control for a water boiling vessel has but a single thermistor arranged to sense the temperature of the heating element of the vessel and performs various functions in dependence upon the rate of change of the thermistor temperature and/or upon the absolute temperature at the thermistor. Protection against a so-called dry boil condition, where the vessel is switched on when empty, is provided either by detecting an undue rate of rise of the sensor temperature at switch on or by determining whether or not there is a significant increase in the element temperature if the element is powered only for a few seconds. Automatic boil detection is sensed as a function of the decreasing rate of temperature rise which occurs at boiling. Scale contamination is detected as a function of the rate of rise of the element temperature at initial switch on and/or as a function of the absolute temperature of the element at boiling. Analogue and microprocessor based controls are disclosed, with particular application to so-called "cordless" electric kettles.

FLANGE TEMPERATURE VERSUS TIME

FIG.1

EP 0 380 369 A1

## CONTROLS FOR ELECTRICALLY POWERED HEATING ELEMENTS

This invention generally concerns improvements in and relating to controls for electrically powered heating elements. Whilst the invention will be particularly described herein with reference to controls for the electric heating elements of liquid heating vessels, particularly water boiling vessels, especially kettles but also including jugs, pots, pans, urns, laboratory equipment, etc., the invention is not limited to such controls and is considered to be capable of wider application.

In our British Patent Publication No. GB-A-2185161 there is described an electronic kettle control that promised to be price competitive with at least the more sophisticated of the traditional bimetal based controls and has indeed found some commercial success. In the electronic control of GB-A-2185161 the rate of change of temperature was utilized as a controlling parameter, and the specific circuits described utilized an NTC thermistor in close thermal proximity with the heating element head cup for sensing heating element and water temperatures and a PTC thermistor exposed to the steam generated when water boiled in the vessel, the rationale for the use of an NTC and a PTC thermistor residing in their different resistance/temperature characteristics with the NTC thermistor exhibiting a relatively gradual change of resistance with temperature and the PTC thermistor exhibiting a much more abrupt resistance change at or about a particular temperature. In the control circuits of GB-A-2185161 the rate of change of the resistance of the NTC thermistor, indicative of the rate of temperature rise of the element head, was utilized to provide an indication as to whether normal heating of a filled vessel was taking place or whether abnormally rapid heating of the element, indicative of the vessel having been inadvertently switched on when empty for example, was taking place, and the relatively abrupt resistance change of the PTC thermistor was utilized to indicate the generation of steam. The NTC and PTC thermistors jointly controlled the operation of a triac connected in series with the heating element of the vessel.

The present invention resides primarily in the appreciation that a single NTC thermistor located in close heat transfer relationship with the heating element head plate can be utilized to provide complete control of the heating element. The NTC thermistor is placed in the element head in such a position that when liquid, e.g. water, is present in the vessel the temperature of the NTC thermistor is largely dependent upon the liquid temperature, whereas if no liquid is present, or if the liquid is boiling away, the thermistor temperature will be dependent upon the element temperature.

By virtue of such an arrangement, the invention enables the control of four separate conditions as a function of thermistor resistance and the rate of change thereof, namely:

(i) a boil dry condition wherein the control may be arranged to remove power from the element when the thermistor temperature reaches an abnormally high level (for example around 120°C in the case of a water boiling vessel);

(ii) a dry boil condition where the element is switched on with the vessel empty or substantially empty so that the thermistor temperature rises rapidly and the control removes power from the element;

(iii) a boil condition when liquid is present in the vessel and beginning to boil, the thermistor temperature stabilizing after an initial normal rate of rise and the control being arranged to be sensitive to rates of temperature rise below those caused by normal heating and to remove power from the element when the temperature stops rising; and

(iv) the absolute temperature of the liquid, the control being capable of maintaining a predetermined liquid temperature (for example 85°C for coffee making) by virtue of the thermistor temperature being largely dependent upon the water temperature when liquid is being heated in the vessel.

As will readily be appreciated, for the control of the boil condition abovementioned at (iii) the need might arise to distinguish between the situation immediately following switch-on of the heating element where, on account of thermal lag, the thermistor will not immediately be subjected to a rising temperature and the boil situation. This can readily be achieved by arranging that the boil condition response of the control is disabled for a time period following switch-on of power to the element for example.

The invention also contemplates that the NTC thermistor provided for the above purposes could also be utilized to monitor the absolute element head temperature, as a safeguard, and to remove power from the element in the event of a clear overtemperature (eg. 140°C in the case of a water boiling vessel) such as would only be achieved in a fault condition. However, since such a fault condition would most likely result from a fault in the control itself, it is preferred that an alternative secondary or fail-safe control means be provided. For this purpose a conventional bimetal switch arranged for operation at a sensed element temperature of 140°C for example might be provided, or alternatively an arrangement wherein switch contacts are opened in response to the melting of a member having an appropriately selected melting temperature might be provided.

A control in accordance with the present invention as above described might incorporate a microprocessor programmed to monitor the resistance changes of the thermistor and to initiate appropriate action, including corrective action in the event of a fault condition. Alternatively the control might be embodied in an analogue circuit, which might be preferable given the analogue output of the thermistor and given that an analogue-to-digital converter would not be required. Either way, the invention might conveniently be embodied in a custom chip.

A control in accordance with the present invention might advantageously further include a facility for warning the user of a liquid heating vessel, particularly though not exclusively an electric kettle or other water boiling vessel, of the need to de-scale the vessel. Such a facility might be provided in either of two ways, namely:

(a) when a water boiling vessel, an electric kettle for example, is switched on there is always a rapid but limited rise in temperature at the hot return location of the element head (that is to say the location where the heating element proper is curved back into contact with the wet side of the element head) and the magnitude of this temperature rise increases detectably with increasing element insulation through scale contamination, thus providing an indirect measure of the amount of scale present; and/or

(b) by a similar mechanism the temperature of the hot return at the time when liquid is boiling also increases with increasing scale contamination so that an absolute temperature measurement made at the hot return at the same time as boil detection is effected will enable a scale warning to be generated.

Where a scale warning facility is provided as per (a) above it is a simple matter to discriminate logically between the rapid temperature rise associated with scale build-up and the rapid temperature rise associated with a dry-boil condition.

The present invention also proposes an additional method of dry boil detection, namely by:

(i) measuring the element temperature when the heating element is first switched on;

(ii) applying a short burst of power (say for 2 seconds);

(iii) waiting for a further short time period (say 4 seconds);

(iv) if the element temperature has not risen significantly since (i) then all is well and heating can proceed with the normal rate-of-rise control methods being applied for boil detection or boil dry protection, but if the element temperature has risen significantly, indicating that there is no or insufficient liquid in the vessel, then heating is stopped. The above method would best be embodied in a microprocessor based control though it could be embodied in an analogue circuit.

Further features of the present invention are set forth in the appended claims and, together with the features abovementioned and the advantages thereof will become apparent to those possessed of the relevant skills from consideration of the following description of exemplary embodiments given with reference to the accompanying drawings wherein:

Figure 1 is a graphical showing of the change in the head temperature of a heating element with time, both in the presence of water and with no water present;

Figure 2 is a circuit diagram of an exemplary analogue electronic kettle element control circuit according to the present invention;

Figure 3 is a circuit diagram of an exemplary microprocessor based electronic kettle control according to the present invention; and

Figure 4 is a logical flow chart illustrating the operation of the embodiment of Figure 3.

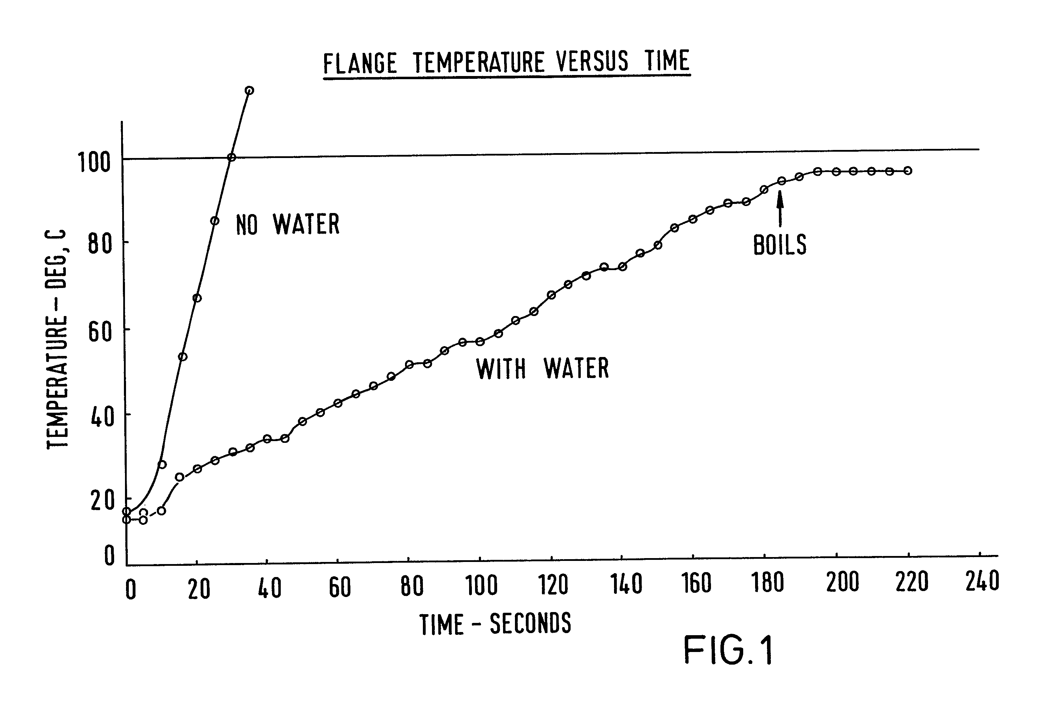

Referring first to the graphical showings in Figure 1 it can be seen that, in the presence of water in a vessel, the head temperature of an electrically powered heating element immersed in the water will take a short time period to begin to rise after the heating element is switched on, due to the thermal inertia of the element head, and will then increase at a substantially constant rate until shortly after boiling temperature is reached when the rate of temperature increase will slow, as the element head temperature catches up with the boiling water temperature, and will finally cease as the element head temperature stabilizes. The element head temperature under these conditions is shown in Figure 1 as not reaching 100°C and this is because of the heat sink effect of the element head. When the heating element is switched on with no water in the vessel, as is shown by the other trace in Figure 1, there is a much more rapid rate of temperature rise in the element head, as might be expected, and there is no levelling off of the rate of temperature rise as a temperature of 100°C is approached. The present invention takes advantage of these differences in a control circuit utilizing but a single NTC thermistor mounted such that:

(a) the thermistor experiences a rapid temperature rise if the heating element is switched on dry, by direct influence from the heating element;

(b) the thermistor temperature is determined by the water temperature when water is present; and

(c) the slowing of the temperature rise at boiling is rapid and detectable.

Electrically powered heating elements for kettles and other water boiling vessels are commonly

3

constructed with an element proper (that is to say a portion which gets hot when the element as a whole is powered) which is mounted to an element head serving for mounting the element in a vessel, and with cold tails of the element proper projecting through the element head and accessible for making electrical connection to the element, and a hot return portion of the element proper coiled into contact with and soldered or brazed to the wet side of the element head. This provides a hot spot on the dry side of the element head where the head temperature is close to the temperature of the heating element proper. This hot spot is the ideal location for mounting of the thermistor in the control of the present invention, but conflict may arise between the requirement of a appropriate location of the thermistor and the requirement for location of a secondary or fail-safe protection device also in close thermal contact with the element head. The degree of this conflict need only be small, however, particularly on account of the relatively small size of the thermistor and no difficulties are envisaged in providing both thermistor-based primary control and bimetal, fusible element or other secondary control.

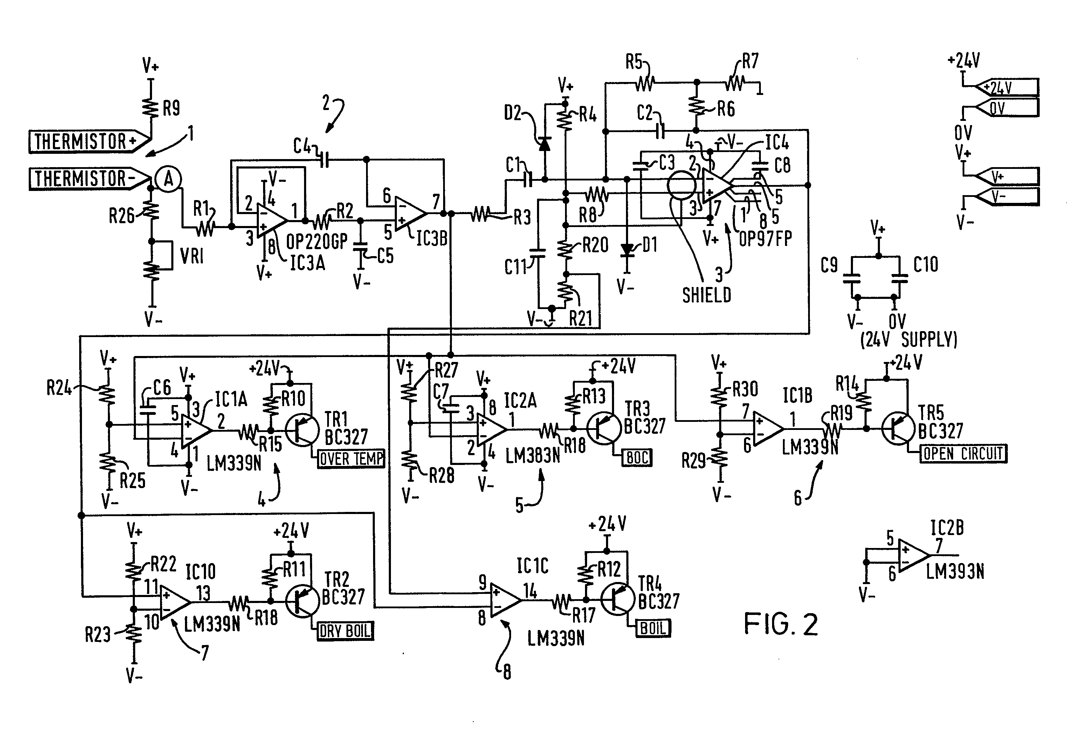

Referring to Figure 2, this figure shows an exemplary analogue embodiment of the present invention, but excludes the decision-making logic which converts the outputs of the circuits shown into signals for controlling the operation of a triac connected in series with the heating element and, as may be considered desirable, for controlling the operation of various LED's providing an indication of the state of the circuit, such logic circuitry being well within the skills of the average electronics technician.

Using the references indicated in the Figure, the NTC thermistor 1 forms part of a resistor chain which is energized by the supply voltage. As the resistance of the thermistor decreases with increasing temperature, so the voltage developed at point A in the circuit increases. This voltage is applied to a two pole low pass filter 2 comprising IC.3(a), IC.3(b), R1, R2, C4 and C5 which serves to remove from the thermistor signal any mains frequency components. The output of the filter 2 is applied to the input of a differentiator 3 and is also applied to the inputs of three voltage comparators 4, 5 and 6 designated "OVER TEMP", "80°C and "OPEN CIRCUIT" respectively. Each comparator 4, 5, 6 constituted respectively by IC.1A, IC.2A and IC.1B compares the output of the filter 2 against a reference voltage derived from a resistor chain and set to an appropriate level for the particular function of the respective comparator. The outputs of the comparators are converted into logic level outputs by the transistors shown coupled to the comparators and fed to the decision making logic. The differentiator 3 is constituted by IC.4, R5, R6, C1 and C2 and has a basic time constant defined by R5, R6 and C1 of approximately one second and produces a voltage output bearing a unitary relationship with the rate of change of the input from the filter, that is to say for a 50mV/sec input the differentiator will produce a dc output of 50mV. Capacitor C2 serves to roll-off the response of the differentiator so that high frequency noise does not interfere with the operation of the control, it being appreciated that a mains powered electric heating element is an electrically noisy environment. The output from the differentiator 3 is fed to two further comparators 7 and 8 respectively designated by "DRY BOIL" and "BOIL" and constituted by IC.1D and IC.1C, and as with the comparators 4, 5 and 6 the comparators 7 and 8 each have their own reference voltage and have their outputs converted into logic level outputs.

The comparator 4 has its reference voltage set to a level appropriate for providing an overtemperature output when the thermistor 1 is subject to an abnormally high element head temperature, for example 120°C. The comparator 5 has its reference voltage set to a level appropriate for providing an output when the element head temperature sensed by the thermistor is 80°C, that is to say a temperature at which the water being heated is at an appropriate temperature for making coffee. The comparator 6 has its reference voltage set to a level appropriate for providing a fault detection output representative of the thermistor having gone open circuit, for example. These three comparators respond to the filtered signal from the thermistor, and not to the rate-of-change signal from the differentiator 3. The comparators 7 and 8 on the other hand respond to the rate-of-change of the thermistor signal, derived by the differentiator, and their reference voltage levels are set to detect a very large rate of rise of the thermistor signal representative of a dry boil situation and a zero rate of rise representative of a boil situation respectively.

The logic level signals "OVER TEMP", "80°C", "OPEN CIRCUIT", "DRY BOIL" and "BOIL" derived from the comparators are supplied to decision making logic which functions in the manner which will hereafter be described. It has first to be mentioned that the control in question is for a kettle having two modes, namely an 80°C mode designed to heat the water in the kettle to a temperature suitable for making coffee, and a "BOIL" mode designed to heat the water to boiling. The modes are selected by operation of appropriate switches, and respective LED's associated with the switches are arranged to be lit while the kettle element is powered and is bringing the water up to the required temperature and are switched off and a buzzer sounded when the required temperature is reached and the control responds.

When the 80°C switch is operated, a triac controlling the supply of mains current to the heating element is activated and the 80°C LED is illuminated. The outputs from all of the comparators are ignored

4

for a set time period (for example 10 to 20 seconds) after switch on to allow the system to settle and to allow for an initial rapid rate of rise of the thermistor temperature due to turn on. After this initial period, the outputs from all but the "BOIL" comparator 8 are monitored by the logic. If any of the "OVER TEMP", "OPEN CIRCUIT" or "DRY BOIL" signals from the respective comparators exhibit a change from their normal operating state, either immediately after the initial dwell period or thereafter, then the triac is immediately switched off, the LED extinguished and the bleeper sounded. Otherwise the "80°C" signal is continuously monitored until it alone changes state, indicative of a normal heating of the water up to 80°C, whereon the triac is switched off. When the water temperature cools below 80°C the triac is again switched on and this heat/cool process continues for eight cycles (for example) maintaining the temperature at approximately 80°C after which the triac and LED are switched off and the bleeper sounded.

When the "BOIL" switch is operated, the "BOIL" LED is illuminated and the procedure is as described above for the 80°C situation except that when 80°C is reached the "BOIL" signal is monitored and the "80°C" signal is ignored. Detection of "BOIL" results in the triac and the "BOIL" LED being switched off and the bleeper being sounded. The logic is furthermore arranged so that if, shortly after switching off automatically, the kettle is manually switched to "BOIL" again, it will boil for at least a set time period (10 seconds for example) before switching off again automatically.

As a protective feature, the logic ensures that if the control has responded to an "OVER TEMP" situation by switching off the triac, then it will not enable the triac to be activated again until the "80°C" signal has ceased, indicating that the element temperature is below 80°C.

The circuit of Figure 2 provides an effective control for an electrically heated water boiling vessel, such as a kettle for example, and as described utilizes but a single thermistor sensing the element head temperature to provide a variety of operating functions some of which are dependent upon the absolute level of the signal from the thermistor and others of which are dependent upon the rate of change of the thermistor signal. The control as particularly described is exemplary only and many modifications and variations will occur to those possessed of relevant skills without departure from the spirit and scope of the invention. For example, additional selectable temperature settings could readily be provided and alternative indicating arrangements, both visual and aural, could be provided. The control furthermore is well suited for incorporation into a water boiling vessel of the so-called cordless type wherein the vessel proper incorporates a heating element arranged to be powered only when the vessel is seated on a base part connected to the mains supply, the vessel proper and the base part having cooperating terminals providing connection to the element when the vessel part is seated on the base. Additionally, while the control as described has utilized an NTC thermistor, any other solid state temperature sensitive element having a similar or equivalent gradual response to temperature could equally well be used in the practice of the invention.

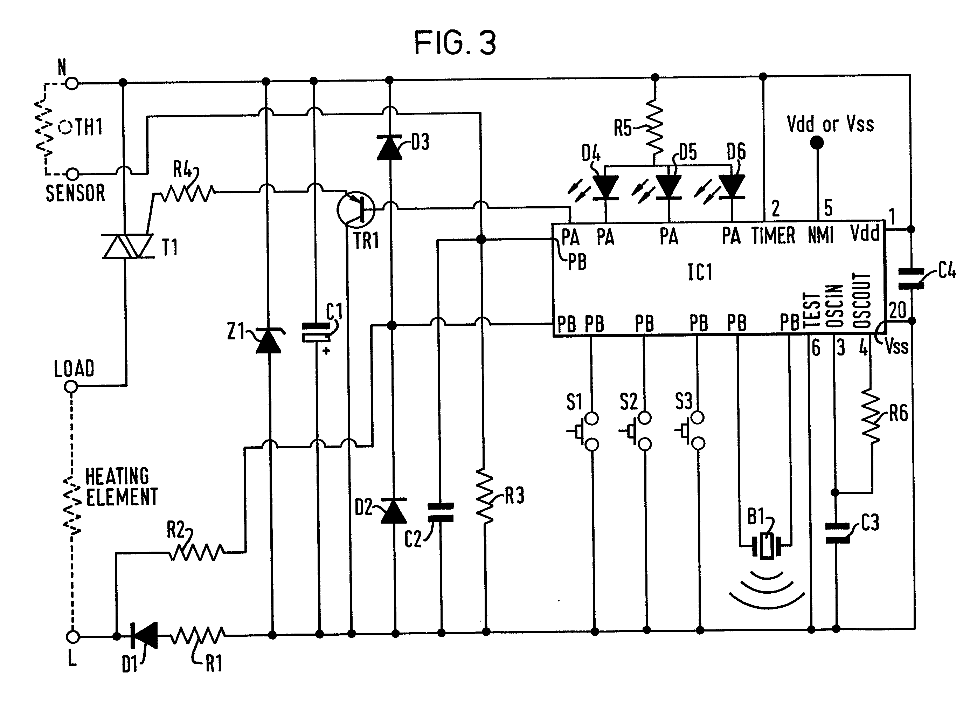

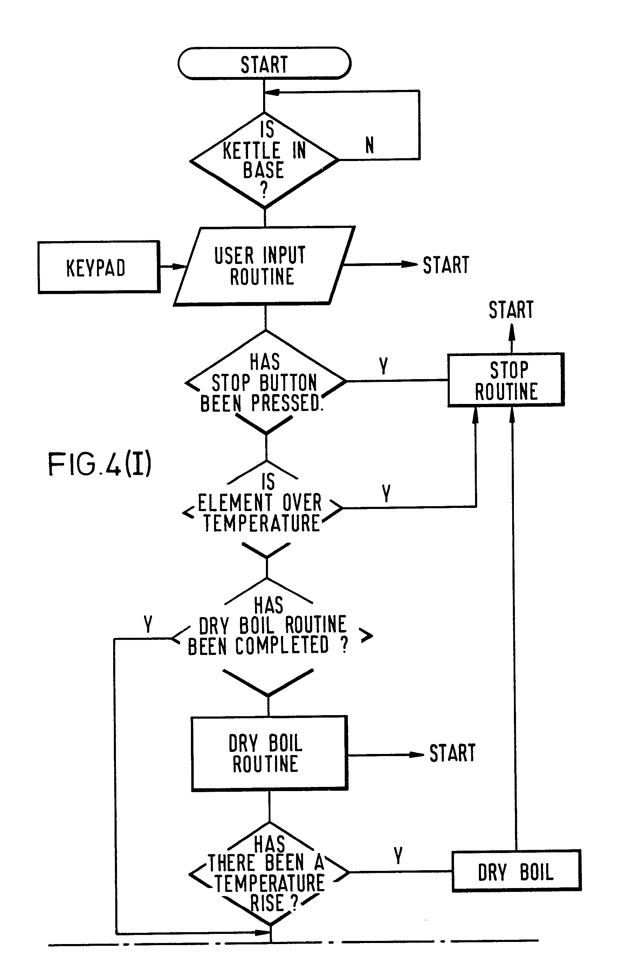

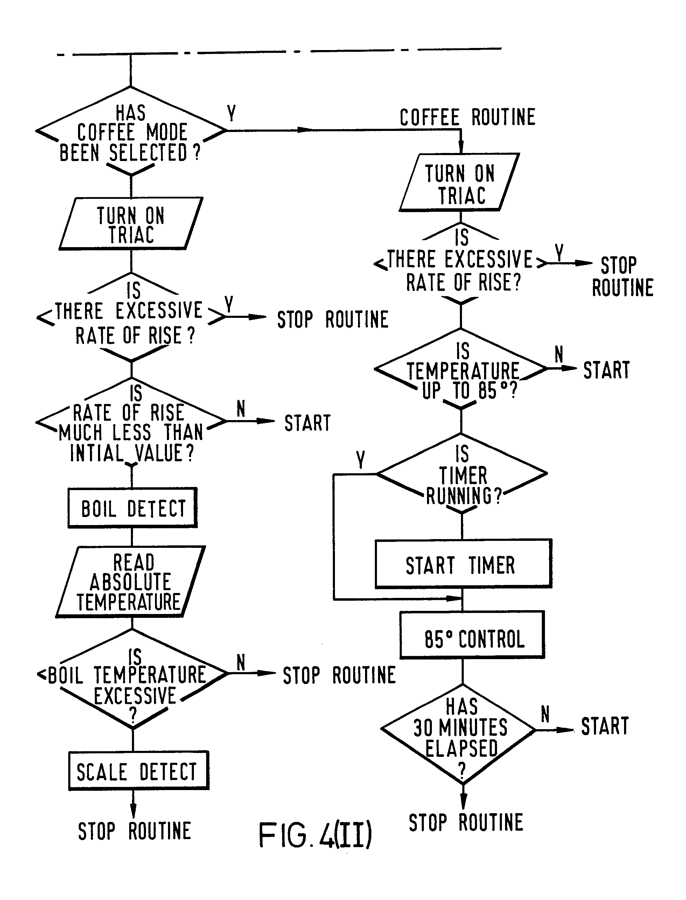

Referring now to Figures 3 and 4 of the accompanying drawings, these depict a microprocessor based embodiment of the invention and its operational routine, respectively. The control is adapted for use with a water boiling vessel of the cordless type abovementioned, though of course this is not essential, and is based around a single chip microprocessor having integral ROM and RAM and an A/D converter and which preferably is mask programmed, that is to say the microprocessor program is permanently resident in the microprocessor.

As shown in Figure 3 where the microprocessor ICI is an ST 6210 microprocessor, a power supply is provided by R1 (rated at several watts), Z1 and C1, with D1 rectifying the supply current and C4 decoupling the power supply. R2 and clamp diodes D2 and D3 provide a square wave at mains frequency which is fed to an I/O pin of the microprocessor configured under software control as an interrupt sensitive to both rising and falling edges, and this provides the microprocessor with a means for keeping time and firing the triac T1 at zero-crossings of the mains supply. R6 and C3 are timing components for the microprocessor clock. TR1 and R4 enable the microprocessor to drive the triac gate, since the I/O current available would otherwise be inadequate. The thermistor TH1, which conveniently is an NTC thermistor though this is not essential, is adapted to be located in the heating element cup in close thermal contact with the hot return part of the element and is connected in series with R3 to provide a temperature dependent voltage which is fed to an I/O pin of the microprocessor configured under software control as an A/D input, and C2 prevents high frequency noise from disturbing the A/D converter.

D4, D5 and D6 are LED's and R5 is a current limiting resistance. The three LED's are used only one at a time in order to avoid differing brightnesses, and each lamp can be used to represent several different states, for example as follows:

|    | STEADY | RAPID FLASH | SLOW FLASH |
|----|--------|-------------|------------|
| D4 | Stop | Dry Boil or boil dry | Kettle not in base |
| D5 | Heating to coffee temp. | Coffee temp. reached De-scale required | Coffee temp. reached |
| D6 | Heating to boiling | Boiled De-scale required | Boiled |

Push-buttons S1, S2 and S3 correspond to "STOP", "COFFEE" and "BOIL" and each button is associated on a control panel of the base part with its corresponding one of the three LED's. B1 is a piezoelectric sounder connected to two I/O pins of the microprocessor which are configured as push-pull outputs to enable two second levels to be generated, namely quiet "beeps" to confirm key pushes and louder "beeps" to indicate that the kettle has boiled, dry boiled etc.

Figure 4 is a flow diagram providing an outline, functional view as to how the microprocessor is programmed and it is considered to be well within the average routine skills of a computer programmer to derive a detailed program from this flow diagram; it is thus considered to be unnecessary to provide further program information herein. As already intimated, the microprocessor is programmed to enable the kettle in question to be selectively operated in "COFFEE" or "BOIL" modes and to be responsive to operation of a "STOP" button. The programming further provides for detection of an element overtemperature condition, arising for whatever reason, and for switching off of the triac and thereby unpowering of the heating element if such a condition is detected. A dry boil condition is detected by means of a routine as previously described herein whereby the triac is switched on and the heating powered up for only a few seconds, and the resultant temperature change at the thermistor is monitored to see if it is excessive indicating that the heating element is not immersed. Having completed the initiating routines satisfactorily, indicating that the element temperature is at an acceptable level and there is water in the vessel to be heated, the microprocessor routine determines which mode of operation, "BOIL" or "COFFEE", has been selected and proceeds accordingly, monitoring the rate of rise of the thermistor temperature as a safety procedure and/or to detect boiling as appropriate. If the "COFFEE" mode has been selected, the microprocessor determines when the thermistor temperature corresponds to a water temperature of 85°C and then enters a routine to maintain the water at the temperature for a predetermined period of, say, 30 minutes after which it switches off the triac. If the "BOIL" mode has been selected, the microprocessor detects the reduced rate of temperature rise which indicates that the water in the kettle is boiling, and then reads the absolute temperature at the thermistor to detect whether or not there is an excessive boil temperature condition indicative of excessive scale contamination of the element before switching off the triac. As is conventional in microprocessor routines, the microprocessor continuously cycles through its various routine possibilities and sets flags to indicate the status of its various sub-routines, and in Figure 4 this is not shown; this accounts for the showing in Figure 4 of many positions where the routine returns to START, and of course this does not means that in returning to START from any point in the routine the microprocessor necessarily repeats every item of its routine from START up to that point, rather flags will have been set to enable inappropriate portions of the routine to be by-passed.

Referring to the details of Figure 4, the first determination made by the microprocessor after START is whether or not the kettle is properly seated in the base, the embodiment in question being for a so-called cordless kettle as mentioned previously herein. In such a cordless kettle, the thermistor would be a permanent fitment in the kettle part that is removable from the base where the remainder of the electronics would be housed, and would be arranged to connect to the base electronics when the kettle was properly seated on the base. The determination as to whether or not the kettle was properly seated in the base might thus be made by virtue of the microprocessor detecting whether or not there was an appropriate voltage at the I/O pin coupled to the thyristor. If the kettle is not properly seated in the base the routine returns to START and a warning buzzer might, if desired, be sounded.

Having determined that the kettle is properly seated, the microprocessor enters a user input routine where it tests to see what, if any, user inputs have been entered at the switches S1, S2, S3 (the keypad). Again if there is no input from the user the routine cycles back to START. If there is a user input, the routine proceeds and a check is made to see if the stop switch SI has been actuated. If it has not, a determination of the absolute temperature at the thermistor is made as a first level precautionary measure. If the stop switch has been actuated or if the thermistor is over temperature the microprocessor enters a stop routine whereby the program goes back to START and previously set progress flags are reset, but certain information held in the microprocessor (for example the most current sensed rate of temperature rise) is retained.

The next stage in the program, assuming the routines so far described have been completed successfully, is to check for a dry boil condition, that is to say a condition where the kettle element is powered up without there being any water in the kettle or with only an insufficient amount of water in the kettle. In the embodiment illustrated, the dry boil routine that is utilized is the alternative routine mentioned hereinbefore where the element is powered for a few seconds and then switched off and the resulting thermistor temperature is sensed a few seconds later to see if there has been an undue temperature rise indicative of the element effectively being dry boiled. However, this dry boil routine could be replaced by a routine based on the rate of change of the thermistor temperature as first mentioned herein. If a dry boil condition is detected, an alarm is sounded and the microprocessor adopts a condition such that the kettle is inoperative and non-responsive to user entered commands until such time as the kettle has been lifted off of the base, whereupon the routine resets to START. Until the dry boil routine has been completed, the microprocessor is still responsive to the keypad controls.

Having successfully negotiated the abovementioned stages, the microprocessor is set for go and a determination is made as to which of the "BOIL" and "COFFEE" modes has been selected by the user. The microprocessor then turns on the triac and the element begins to heat the contents of the kettle.

If the "BOIL" mode has been selected, the microprocessor monitors the rate of rise of the thermistor temperature and uses this information as a precautionary measure for detecting any excessive rate of rise which, if detected, would set the microprocessor into its stop routine as abovementioned, and to detect boiling when the rate of temperature rise at the thermistor decreases. When boiling is detected, a determination is made by the microprocessor as to whether the absolute temperature of the thermistor at boiling is excessive and, if it is, a scale warning is initiated. In either case the microprocessor then enters its stop routine.

If the "COFFEE" mode is selected, rather than the "BOIL" mode, there is again a precautionary monitoring of the rate of rise of the thermistor temperature to see if it is excessive and, if all is well, the routine proceeds until the microprocessor determines that the water temperature in the kettle is 85°C. A timer then starts to run and the water temperature is maintained at 85°C for a set period of, say, 30 minutes. When the timer times out at the end of this period the microprocessor enters its STOP routine.

The routines outlined above and the arrangement of the second embodiment are exemplary only and various modifications could be made without departure from the spirit and scope of the present invention as defined in the appended claims. For example, it might be possible to dispense with the thermistor and to utilize the temperature dependence of the element resistance as a temperature sensor, though this would not presently be preferred.

## Claims

1. A control for a liquid heating vessel incorporating an electrically powered heating element and wherein the functions of the control are effected in dependence upon the provision of a single temperature sensor associated with the element so as when the vessel is filled with liquid to be subject predominantly to the liquid temperature and when the vessel is empty to be subject to the element temperature, the functions of the control including an automatic switch-off on boiling function ("BOIL") and an automatic switch-off when the heating element is powered without sufficient liquid in the vessel function ("DRY BOIL") both of which are effected in dependence upon the rate of temperature rise of the sensor.

2. A control as claimed in claim 1 wherein the sensor is an NTC thermistor or other solid state device having a similar gradual temperature response characteristic.

3. A control as claimed in claim 1 or 2 which furthermore has one or more of the following functions effected in dependence upon the absolute temperature level sensed by the sensor, namely:

(i) an overtemperature function whereby the heating element is switched off in response to a sensed element overtemperature condition:

(ii) a set temperature function whereby the heating element is switched off in response to a sensed element temperature corresponding to a set temperature below boiling temperature;

(iii) a sensor failure function whereby the heating element is switched off in response to absence of the sensor output.

4. A control as claimed in any of the preceding claims wherein the condition of the sensor is arranged to provide a plurality of logical outputs each indicative of a predetermined sensor state and the logical outputs are logically processed in order to achieve the requisite control functions.

5. A control as claimed in claim 4 wherein the logical outputs are obtained by comparing the sensor condition and the rate of change of the sensor condition with respective preset data representative of

EP 0 380 369 A1

predetermined situations to be responded to by the control.

6. A control as claimed in any of the preceding claims and including a scale warning function responsive to the magnitude of an initial high rate temperature rise at the sensor on switch of the heating element, and/or to the absolute level of the sensor temperature when boiling is sensed.

7. A control as claimed in any of the preceding claims and including a microprocessor responsive to the condition of the sensor for performing a programmed routine of logical functions.

8. An electrically heated water boiling vessel incorporating a control as claimed in any of the preceding claims.

9. An electrically heated water boiling vessel as claimed in claim 8 comprising a "cordless" vessel proper and an electrically powered base adapted for the supply of power to the vessel proper when it is seated on the base.

10. An electrically heated water boiling vessel as claimed in claim 9 and wherein the sensor is a permanent fixture of the vessel proper and the control housed in the base includes means responsive to the sensor condition for determining that the vessel proper is not properly seated on the base.

11. A control for a liquid heating vessel incorporating an electrically powered heating element and adapted to provide a "DRY BOIL" protection function to ensure that the heating element is automatically switched of in the event of its being switched on without sufficient liquid in the vessel, said "DRY BOIL" protection function being effected by sensing the heating element temperature, applying a short burst of power to the heating element, sensing the element temperature a further short time period after said power burst is terminated, and determining that a "DRY BOIL" condition exists when there is a significant difference between the two sensed element temperatures.

12. A control as claimed in claim 11 which is further adapted to provide a "BOIL" function for automatically switching off the heating element when liquid boils in the vessel, said "BOIL" function being effected by monitoring the rate of temperature rise during the period that the heating element is powered and detecting the slow down in the rate of rise which accompanies boiling.

13. A control as claimed in claim 11 or 12 which is further adapted to provide a "SCALE DETECT" function to provide an indication of scale contamination of the heating element, said "SCALE DETECT" function being effected (a) by detection of an initial rapid temperature rise to an abnormally high level upon initial switch-on of the heating element, and/or (b) by detection of the element temperature when boiling is detected.

14. A control as claimed in claim 11 or 12 or 13 wherein further protective functions are provided in response to a sensed excessive absolute temperature and/or a sensed excessive rate of temperature rise.

15. A control as claimed in any of claims 11 to 14 wherein a temperature sensor is provided in intimate thermal contact with the heating element of the vessel, electronic circuitry is associated with said sensor for making logical determinations, and an electronic switching device controlled as a function of said logical determinations is coupled in series with the heating element.

16. A control as claimed in claim 15 wherein said electronic circuitry comprises an appropriately programmed microprocessor.

17. An electrically heated water boiling vessel incorporating a control as claimed in any of claims 11 to 16.

18. An electrically heated water boiling vessel as claimed in claim 17, said vessel being of the "cordless" type comprising a vessel proper with an electric heating element and a separate electrically powered base for said vessel, the vessel proper and base having connector means adapted to co-operate when the vessel is properly seated on the base for supplying power to the heating element, and the control being responsive to improper seating of the vessel on the base to inhibit the supply of electrical power to the connector parts located in the base.

19. An electrically powered, microprocessor controlled, water heating appliance having "BOIL" and "COFFEE" functions respectively for heating water in the appliance to boiling and for heating water in the appliance to a temperature (of the order of 80-85° C for example) suitable for making coffee, the appliance including an electric immersion heater element of the type having a hot return portion of the element coupled in close thermal contact with a head portion of the element so as to define a hot spot therein, and a sensor associated with the element head portion hot spot so as to be responsive to the element temperature, and the microprocessor being programmed so as to be responsive to user inputs to perform a plurality of functions in dependence upon the output of said sensor and the rate of change thereof, said functions including:

(i) an element overtemperature warning function dependent upon the absolute level of the sensor output;

(ii) a dry boil warning function, indicative of the appliance being switched on and the heating element

8

powered without there being any or sufficient water in the appliance, dependent upon the rate of temperature rise sensed by the sensor;

(iii) an automatic switch-off on boiling function dependent upon a sensed reduction in a normal rate of temperature rise sensed by the sensor;

(iv) a coffee temperature function dependent upon the absolute level of the sensor output achieving an appropriate level attained with a normal rate of temperature rise; and

(v) a scale warning function dependent upon the absolute level of the sensor output shortly after initial switch-on and/or at boiling being indicative of the element being insulated by an excessive scale coating.

20. A water heating appliance as claimed in claim 19 and of the cordless type, the appliance comprising a vessel incorporating the heating element and the sensor and a first set of terminals, and a base adapted to be connected to the electrical supply and incorporating the microprocessor control circuitry and a second set of terminals, the first and second sets of terminals being adapted to co-operate for supplying power to the heating element and for coupling the sensor to the microprocessor when the vessel is seated on the base, and the microprocessor being programmed to be responsive to determination of an apparent sensor missing condition, indicative of the vessel being separated from or improperly seated on the base, to inhibit the supply of electrical power to said second set of terminals.

FLANGE TEMPERATURE VERSUS TIME

NO WATER

WITH WATER

BOILS

TEMPERATURE – DEG, C

TIME – SECONDS

FIG.1

EP 0 380 369 A1

FIG. 2

EP 0 380 369 A1

# FIG. 3

EP 0 380 369 A1

FIG.4(I)

HAS COFFEE MODE BEEN SELECTED? — Y → COFFEE ROUTINE

TURN ON TRIAC (coffee routine)

IS THERE EXCESSIVE RATE OF RISE? — Y → STOP ROUTINE

IS TEMPERATURE UP TO 85°? — N → START

IS TIMER RUNNING? — Y →

START TIMER

85° CONTROL

HAS 30 MINUTES ELAPSED? — N → START

STOP ROUTINE

---

TURN ON TRIAC

IS THERE EXCESSIVE RATE OF RISE? — Y → STOP ROUTINE

IS RATE OF RISE MUCH LESS THAN INTIAL VALUE? — N → START

BOIL DETECT

READ ABSOLUTE TEMPERATURE

IS BOIL TEMPERATURE EXCESSIVE? — N → STOP ROUTINE

SCALE DETECT

STOP ROUTINE

FIG. 4(II)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-4278873 (C. PETRIDES)<br>* column 4, line 49 - column 5, line 23; figures 1, 2 * | 1-5, 7-9, 18 | G05D23/24<br>A47J27/21 |
| Y | US-A-4493981 (T. PAYNE)<br>* column 5, line 52 - column 8, line 39; figures 1-5 * | 1-9, 11-20 | |
| Y | GB-A-2109097 (PA MANAGEMENT CONSULTANTS LTD)<br>* page 1, lines 27 - 53 * | 6, 11-17, 19, 20 | |
| Y,D | GB-A-2185161 (OTTER CONTROLS LIMITED)<br>* page 4, lines 23 - 50; figure 2 * | 1 | |
| Y | US-A-4320285 (B. KOETHER)<br>* column 5, lines 34 - 55; figure 1 * | 3 | |
| Y | GB-A-2185158 (SEB S.A.)<br>* abstract; figure 1 * | 9 | |
| A | US-A-4549527 (J. DAVIS) | | TECHNICAL FIELDS SEARCHED (Int. Cl.5 )<br><br>A47J<br>G05D |

The present search report has been drawn up for all claims

| Place of search | Date of completion of the search | Examiner |
|---|---|---|
| THE HAGUE | 14 MARCH 1990 | HELOT H.V. |